# EUROPEAN PATENT APPLICATION

(11) **EP 2 298 478 A1**
(43) Date of publication of application: **23.03.2011**
(21) Application number: 08874804.1
(22) Date of filing: 12.12.2008
(51) Int. Cl.: B23B 51/06

(54) **DEEP-HOLE BORING DRILL HEAD**

(30) Priority: 23.06.2008 JP 2008162752
(71) Applicant: UNITAC, Incorporated, Amagasaki-shi, Hyogo 661-0033 (JP)
(72) Inventor: NOMURA, Takuji, Amagasaki-shi Hyogo 661-0033 (JP)
(74) Representative: Vossius & Partner
(86) International application number: PCT/JP2008/072629
(87) International publication number: WO 2009/157104

(57) **Abstract**

Provided is a drill head for deep-hole drilling which does not generate such a disc that clogs a cutting chip discharge port when a head main body of the drill head penetrates a work material. The drill head is mounted with a central cutting blade tip 6 at the head center portion so as for a blade edge 6a thereof to be inclined downward toward the head center portion, a circumferential cutting blade tip 7 at a circumferential portion so as for a blade edge 7a thereof to be inclined upward toward the head center portion, and an intermediate cutting blade tip 8 therebetween so as for a blade edge 8a thereof to be inclined upward toward the head center portion, while the cutting blade tips face a cutting chip discharge port 4 or 5. The drill head includes a head main body 2 having an interior hollow portion 3 serving as a cutting chip discharge passage which communicates with the discharge ports 4 and 5. A disc breaker 12 composed of an inclined surface inclined downward toward the head center portion is formed at a head center side end portion of a flank 8b of the intermediate cutting blade tip 8 inclined upward toward the head center portion.

## Description

### [Technical Field]

The present invention relates to a drill head for deep-hole drilling in which a central cutting blade tip is mounted at a center portion, a circumferential cutting blade tip at a circumferential portion and an intermediate cutting blade tip therebetween while facing a cutting chip discharge port opened at a distal end surface of a head main body, and in which an interior of a hollow portion thereof serves as a cutting chip discharge passage communicating with the cutting chip discharge port.

### [Background Art]

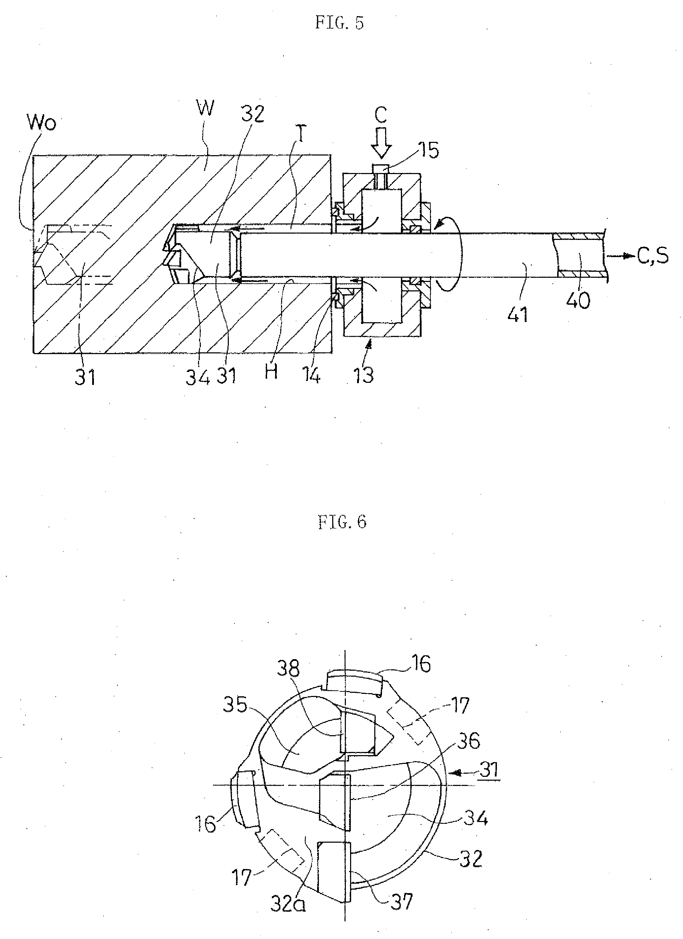

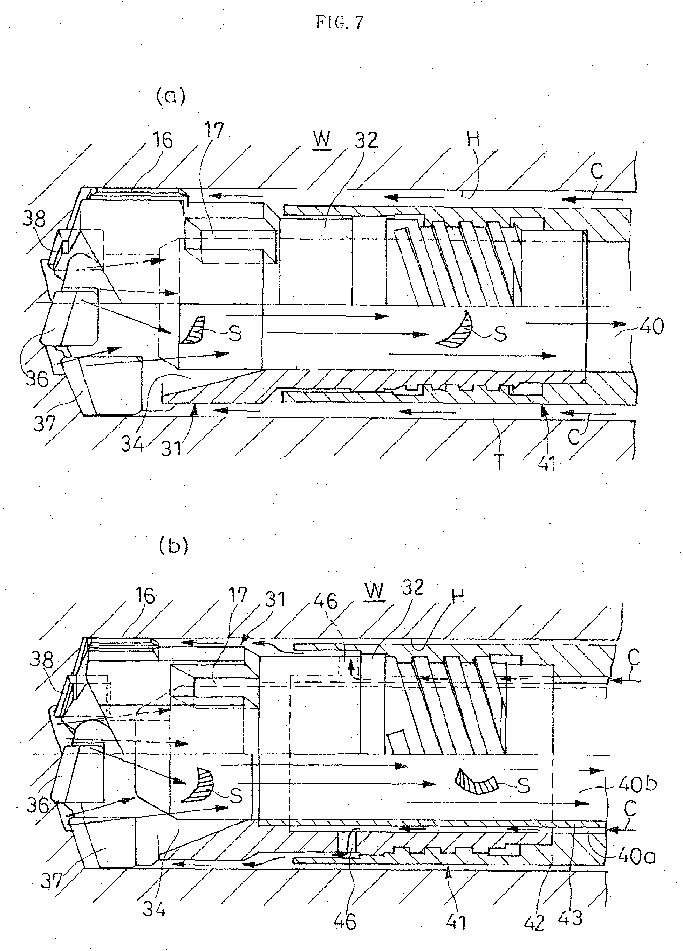

FIG. 5 illustrates a deep-hole drilling work state by a conventional deep-hole drilling apparatus. Drilling work is carried out by coupling a proximal end side of a boring bar 41 which holds a drill head 31 at a distal end portion thereof to a spindle of a machine tool or the like via a tool chuck (not shown) to be rotatingly driven or otherwise rotate a work material W. Herein, a coolant is supplied in the manner of an external supply system, and a coolant supply jacket 13 encompassing the hollow boring bar 41 oil-tightly is used. While the jacket 13 is press-contacted with the work material W via a seal ring 14, the coolant C is supplied from an introduction port 15 into the jacket 13. The coolant C is then supplied to a distal end side of a head main body 32 of the drill head 31 through a gap T between an outer peripheral surface of the boring bar 41 and an inner circumferential surface of a cutting hole H. As seen from FIG. 7 (a), the coolant C flows from cutting chip discharge ports 34 and 35 of the head main body 32 (see FIG. 6 and FIG. 7) into a cutting chip discharge passage 40 within the boring bar 41 and is discharged outside, together with cutting chips S generated in a cutting region. Further, as shown in FIG. 6 and FIG. 7(a), the head main body 32 is mounted with a central cutting blade tip 36 at the central portion, a circumferential cutting blade tip 37 at a circumferential portion and an intermediate cutting blade tip 38 therebetween, all of which face the cutting chip discharge ports 34, 35 opened at a distal end surface 32a. In FIG. 6 and FIG. 7, a reference symbol 16 denotes a guide pad provided to a distal end side on an outer periphery of the drill head 31, and a reference symbol 17 denotes a clamp groove provided slightly near the middle on the same outer periphery of the drill head 31.

Supply systems of a coolant to a cutting region include an internal supply system (double tube system) such as a so-called ejector system as shown in FIG. 7(b) other than the external supply system (single tube system) such as a so-called BTA system as shown in FIG. 5 and FIG. 7(a) as described above. A coolant in the internal supply system is introduced into a coolant supply passage 40a between outer and inner tubes 42 and 43 at a proximal end side of a double-tube boring bar 41 as shown by arrows in FIG. 7(b). The coolant flows outside at a distal end side of the boring bar 41 from a coolant discharge port 46 provided on a circumferential wall of the drill head 31, thereby being supplied to a cutting region side. Together with cutting chips S generated in the cutting region, the coolant is caused to flow from the cutting chip discharge ports 34 and 35 of the drill head 31 into a discharge passage 40b composed of the inside of the inner tube 43, and then the coolant is discharged outside.

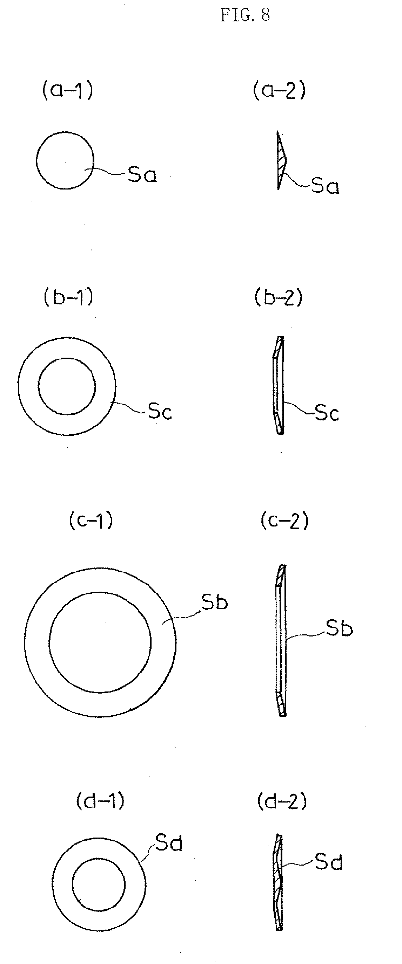

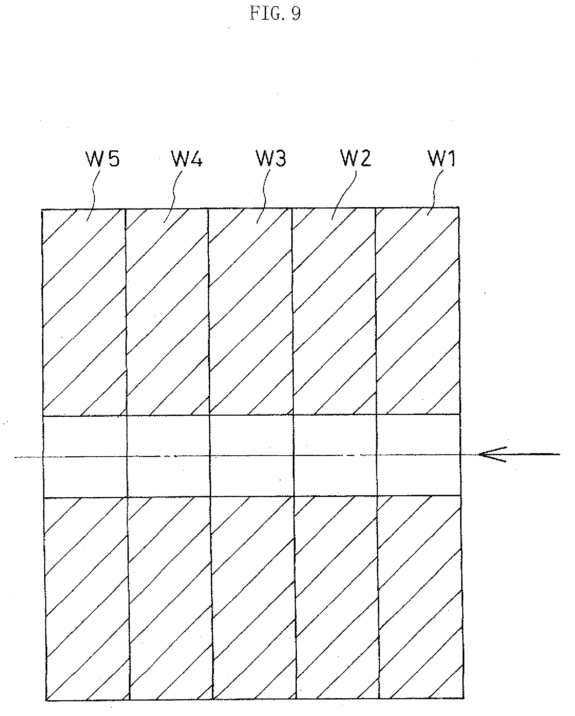

On the other hand, at the time when deep-hole drilling work of a work material W is carried out by the drill head 31 at the distal end portion of the boring bar 41 as described above, cutting chips S of the work material W which are cut by cutting blade tips 36 to 38 are fragmented into pieces smaller than diameters of the cutting chip discharge ports 34 and 35 of the drill head 31 as shown in FIG. 7 (a) and FIG. 7 (b) and flow from the cutting chip discharge ports 34 and 35 into the inside cutting chip discharge passage 40 or 40b and then are discharged outside until the drill head 31 penetrates the work material W. However, at the time when the drill head 31 penetrates the work material W, that is, when the drill head 31 cuts and breaks through a distal end wall Wo of the work material W as shown by virtual lines in FIG. 5, cutting chips of the work material W having been cut by three of central, circumferential and intermediate cutting blade tips 36 to 38 of the drill head 31 become disc-shaped uncut block pieces called discs Sa to Sd as shown in FIGS. 8(a-1), 8(a-2) to 8(d-1), 8(d-2). The cutting chips are left at the distal end surface side of the head main body without being discharged from the cutting chip discharge ports 34 and 35. It does not much matter when the work material W comprises a single work material, since the uncut block pieces are discharged forward and fall from a hole of the penetrated work material W. On the other hand, there was a problem when a plurality of work materials W1 to W5 are overlaid and subjected to deep-hole drilling work as shown in FIG. 9, when attempting to drill a second work material W2 after a first work material W1 is drizzled, discs Sa to Sd are blocked at an exit of a hole of the first work material W1 and the cutting chip discharge ports are clogged, which renders the drilling work unperformable.

FIG. 8 (a-1) and FIG. 8(a-2) are front and cross sectional views of a conical disc Sa generated by the central cutting blade tip 36 of the drill head 31 provided with three of central, circumferential and intermediate cutting blade tips 36 to 38. FIG. 8(b-1) and FIG. 8(b-2) are front and cross sectional views of a toroidal disc Sc generated by the intermediate cutting blade tip 38. FIG. 8(c-1) and FIG. 8(c-2) are front and cross sectional views of a larger diameter toroidal disc Sb generated by the circumferential cutting blade tip 37. FIG. 8 (d-1) and FIG. 8 (d-2) are front and cross sectional views of a hat-shaped disc Sd generated by the central cutting blade tip 36 and the intermediate cutting blade tip 38 and integrally combined by the disc Sa and the disc Sc.

### [Disclosure of the Invention]

### [Problem to be Solved by the Invention]

The present invention was made in view of the foregoing problem, and an object thereof is to provide a drill head for deep-hole drilling which can fragment cutting chips into small pieces without generating such a disc that clogs a cutting chip discharge port when a head main body of the drill head penetrates a work material, and can discharge the cutting chips from the cutting chip discharge port reliably.

### [Means for Solving the Problem]

Means for solving the above-described problem will be described with reference symbols of embodiments which will be described later. A first aspect of the present invention is a drill head for deep-hole drilling comprising a head main body 2, cutting chip discharge ports 4 and 5 opened at a distal end surface 2a of the head main body 2, a central cutting blade tip 6 mounted at the head center portion so as for a blade edge 6a thereof to be inclined downward toward the head center portion, a circumferential cutting blade tip 7 mounted at a circumferential potion so as for a blade edge 7a thereof to be inclined upward toward the head center portion, an intermediate cutting blade tip 8 mounted therebetween so as for a blade edge 8a thereof to be inclined upward toward the head center portion, the cutting blade tips facing the cutting chip discharge port 4, 5, an interior of a hollow portion 3 of the head main body 2 serving as a cutting chip discharge passage communicating with the cutting chip discharge ports 4 and 5, and a disc breaker 12 formed at a head center side end portion of a flank 8b of the intermediate cutting blade tip 8 inclined upward toward the head center portion by cutting a distal end surface side of a region OL where the intermediate cutting blade tip 8 circumferentially overlaps with the central cutting blade tip 6 or a region M including a side slightly nearer than that, the disc breaker 12 composed of an inclined surface inclined downward toward the head center portion.

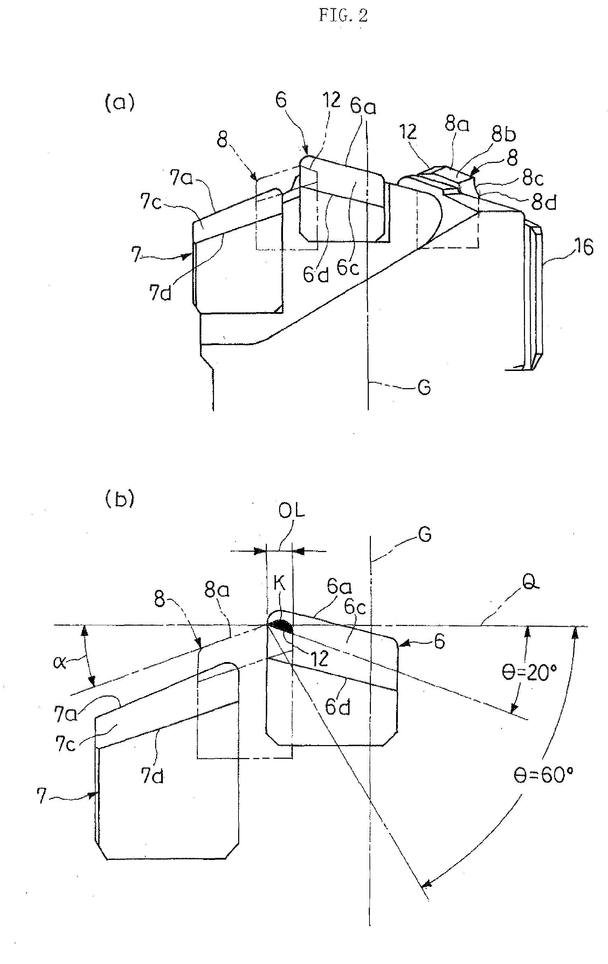

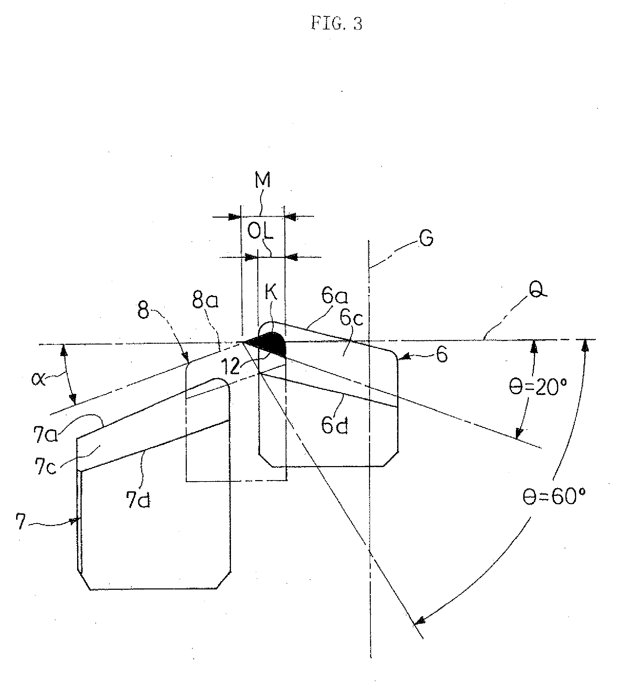

A second aspect is characterized in that the disc breaker 12 is formed into such an inclined surface that an angle with respect to a plane Q orthogonal to a rotation axis G of the head main body 2 in the overlapping region OL or the region M including the side slightly nearer than that as shown in FIG. 3 is 0 to 60 degrees in the drill head described in the first aspect, as shown in FIG. 2(b).

### [Effects of the Invention]

Effects by the solving means of the present invention will be described with reference symbols of embodiments which will be described later. According to the first aspect of the present invention, the distal end surface side of the region OL where the intermediate cutting blade tip 8 circumferentially overlaps with the central cutting blade tip 6 or the region M including a side slightly nearer than that is cut to form the disc breaker 12 composed of an inclined surface inclined downward toward the head center portion, at the head center side end portion of the flank 8b of the intermediate cutting blade tip 8 inclined upward toward the head center portion. Thus, particularly the border between a cutting chip which is cut by the central cutting blade tip 6 and a cutting chip which is cut by the intermediate cutting blade tip 8 is cut by the disc breaker 12, whereby uncut block pieces to be formed between respective cutting blade tips 6 to 8 and a distal end wall portion of a work material W are fragmented and crushed when the drill head 1 penetrates the work material W. The fragmented and crushed cutting chips flow from the cutting chip discharge ports 4 and 5 into the interior cutting chip discharge passage 3 and are discharged outside.

Accordingly, also in a case where a plurality of work materials W1 to W5 are overlaid and subj ected to deep-hole drilling work, uncut block pieces to be formed between respective cutting blade tips 6 to 8 and the distal end wall portion of the work material W are fragmented and crushed at the time of penetrating the first work material W1. Since the fragmented and crushed cutting chips flow from the cutting chip discharge ports 4 and 5 into the interior cutting chip discharge passage 3 and are discharged outside, clogging of the cutting chip discharge ports 4 and 5 of the head main body 2 is eliminated, and normal cutting is carried out on and after the second work material. Thus, deep-hole drilling work of a plurality of overlaid work materials can be carried out properly.

The disc breaker 12 is preferably formed into such an inclined surface that an angle θ with respect to a plane Q orthogonal to a rotation axis G of the head main body 2 in the overlapping region OL or the region M including the side slightly nearer than that is in the range of 0 to 60 degrees as in the second aspect of the present invention. When the angle is below 0 degrees, that is, a negative angle, the border between the cutting chip which is cut by the central cutting blade tip 6 and the cutting chip which is cut by the intermediate cutting blade tip 8 is resistant to cutting, and there is a concern of not serving the role as the disc breaker 12. When the angle θ exceeds 60 degrees, a peripheral edge of the disc breaker 12 becomes too acute and may possibly be damaged.

### [Brief Description of the Drawings]

FIG. 1 (a) is a front view showing a drill head for deep-hole drilling according to the present invention, and FIG. 1(b) is a plan view thereof.
FIG. 2(a) is an enlarged partial view of FIG. 1(a), and FIG. 2(b) is a further enlarged partial view thereof.
FIG. 3 is an enlarged partial view showing another embodiment of a disc breaker according to the present invention, similar to FIG. 2(b).
FIG. 4(a) is a perspective view showing the drill head according to the present invention, and FIG. 4(b) is a perspective view showing a conventional drill head.
FIG. 5 is a longitudinal sectional view showing a deep-hole drilling work state by a deep-hole drilling apparatus provided with the conventional drill head.
FIG. 6 is a plan view showing the conventional drill head.
FIG. 7 shows the conventional drill head during deep-hole drilling work by a deep-hole drilling apparatus provided with the conventional drill head, and FIG. 7 (a) is a cross sectional view along an axis direction in a coolant external supply system and FIG. 7(b) is a cross sectional view along an axis direction in a coolant internal supply system.
FIG. 8 shows uncut block pieces called discs which are formed by cutting blade tips of the drill head when the drill head penetrates a work material, and FIGS. 8(a-1) to 8(d-1) are front views and FIGS. 8(a-2) to 8(d-2) are cross sectional views.
FIG. 9 is a cross sectional view of a state where a plurality of work materials are overlaid and subjected to deep-hole drilling work.

### [Description of Reference Symbols]

1: Drill head
2: Head main body
2a: Distal end surface of head main body
3: Hollow portion of head main body (cutting chip discharge passage)
4, 5: Chip discharge port
6: Central cutting blade tip
7: Circumferential cutting blade tip
8: Intermediate cutting blade tip
12: Disc breaker

### [Best Mode for Carrying Out the Invention]

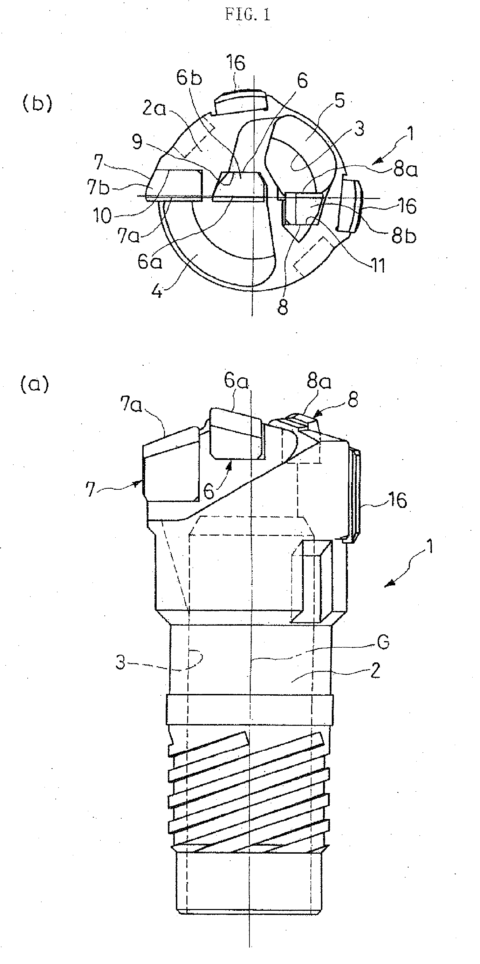

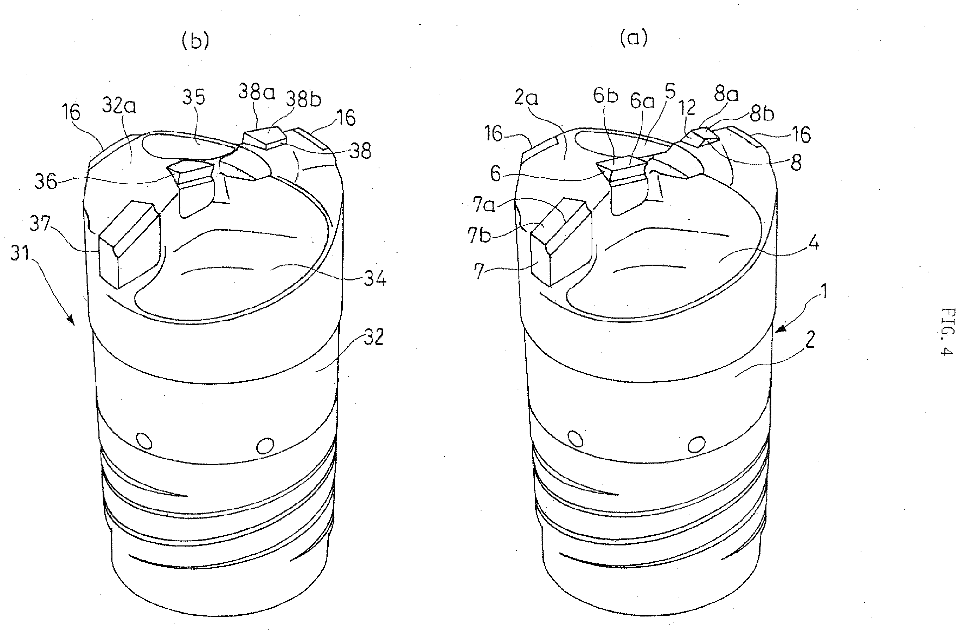

Hereinafter, preferred embodiments of the present invention will be described based on the drawings. FIG. 1(a) is a front view showing a drill head 1 for deep-hole drilling according to the present invention, and FIG. 1(b) is a plan view thereof. FIG. 2 (a) is an enlarged partial view of FIG. 1(a), and FIG. 2(b) is a further enlarged partial view thereof. FIG. 3 is an enlarged partial view showing another embodiment of the present invention, similar to FIG. 2(b). FIG. 4(a) is a perspective view showing the drill head 1 according to the present invention, and FIG. 4(b) is a perspective view showing a conventional drill head. In FIG. 4(a), the drill head 1 for deep-hole drilling includes a substantially cylindrical head main body 2 having a distal end side formed into a substantially obtuse conical shape. An interior of the head main body 2 forms a hollow portion 3 (FIG. 1) and a lower end side of the head main body 2 is opened entirely.

The substantially obtuse conical distal end surface 2a of the head main body is formed with a large and a small cutting chip discharge port 4 and 5 radially opposed to each other and communicating with the hollow portion 3. At an opening edge along a head diameter direction of the large cutting chip discharge port 4, the central cutting blade tip 6 and the circumferential cutting blade tip 7 are brazed to depressions 9 to 11 provided to the head respectively, whereas at an opening edge along the head diameter direction of the small cutting chip discharge port 5, the intermediate cutting blade tip 8 is brazed to depressions 9 to 11 provided to the head.

As shown in FIG. 1(a), FIG. 2 and FIG. 4(a), the central cutting blade tip 6 is mounted so as for a blade edge 6a thereof to be inclined downward toward the head center portion. Thus, a flank 6b is also inclined downward toward the head center portion. The circumferential cutting blade tip 7 is mounted so as for a blade edge 7a thereof to be inclined upward toward the head center portion, and thus a flank 7b is also inclined upward toward the head center portion. The intermediate cutting blade tip 8 is mounted so as for a blade edge 8a thereof to be inclined upward toward the head center portion in the same manner as the circumferential cutting blade tip 7, and thus a flank 8b is also inclined upward toward the head center portion. In FIG. 2 and FIG. 3, reference symbols 6c, 7c and 8c denote cutting faces, and reference symbols 6d, 7d and 8d denote cutting chip breakers. Further, in FIGS. 1 to 3, reference symbol G denotes a rotation axis of the head main body 2.

The drill head 1 according to the present invention is characterized by cutting a distal end surface side of a region OL where the intermediate cutting blade tip 8 circumferentially overlaps with the central cutting blade tip 6, thereby forming a disc breaker 12 composed of an inclined surface inclined downward toward the head center portion, at a head center side end portion of the flank 8b of the intermediate cutting blade tip 8 inclined upward toward the head center portion, as seen from FIG. 2(a) and FIG. 2(b). In FIG. 2(b), the cut region of the distal end surface side of the region OL where the intermediate cutting blade tip 8 circumferentially overlaps with the central cutting blade tip 6 is filled in with black and denoted by symbol K. More accurately, the term disc breaker is used for convenience by the present applicant in order to precisely represent a role as a breaker of transversely fragmenting and crushing discs Sa to Sd (FIG. 8) which are disc-shaped uncut block pieces formed by the central cutting blade tip 6, circumferential cutting blade tip 7, and intermediate cutting blade tip 8.

In this embodiment, the disc breaker 12 is formed into an inclined surface having an angle θ of 20 degrees with respect to a plane Q orthogonal to the rotation axis G of the head main body 2 in the afore-described overlapping region OL as shown in FIG. 2(b). In this case, an angle α between the blade edge 8a of the intermediate cutting blade tip 8 inclined upward toward the head center portion and the orthogonal plane Q is 20 degrees.

In the embodiment as shown in FIG. 2(a), the distal end surface side of the region OL where the intermediate cutting blade tip 8 circumferentially overlaps with the central cutting blade tip 6 is cut to form the disc breaker 12 at the head center side end portion of the flank 8b of the intermediate cutting blade tip 8. The disc breaker 12 according to the present invention, however, is not restricted to the region OL where the intermediate cutting blade tip 8 circumferentially overlaps with the central cutting blade tip 6. The disc breaker 12 can be formed by cutting from a side slightly nearer than the overlapping region OL. This embodiment is shown in FIG. 3. More specifically, in the embodiment shown in FIG. 3, a distal end surface side of a region M including a side slightly nearer (for example, about a half to a third of a width of the overlapping region OL) than the region OL where the intermediate cutting blade tip 8 circumferentially overlaps with the central cutting blade tip 6 is cut, thereby forming the disc breaker 12 composed of an inclined surface inclined downward toward the head center portion, at the head center side end portion of the flank 8b of the intermediate cutting blade tip 8 inclined upward toward the head center portion. In the embodiment shown in FIG. 3, the disc breaker 12 is formed into such an inclined surface that an angle θ with respect to the plane Q orthogonal to the rotation axis G of the head main body 2 in the region M including the side slightly nearer than the overlapping region OL becomes 20 degrees. In this case, an angle α between the blade edge 8a of the intermediate cutting blade tip 8 inclined upward toward the head center portion and the orthogonal plane Q is 20 degrees.

FIG. 4(b) shows a conventional drill head 31. As seen from a comparison with the drill head 1 according to the present invention, the central cutting blade tip 36 and the circumferential cutting blade tip 37 of the conventional drill head 31 are of the same structure with the central cutting blade tip 6 and the circumferential cutting blade tip 7 of the drill head according to the present invention, respectively. However, the intermediate cutting blade tip 38a is formed such that a blade edge 38 and flank 38b thereof are inclined upward from a head periphery end portion to a head center side end portion. As seen from reference to FIG. 2(b), the cut region K at the distal end surface side of the region OL where the intermediate cutting blade tip 8 circumferentially overlaps with the central cutting blade tip 6 is left as is. Accordingly, the cutting chip Sa cut by the central cutting blade tip 6 and the cutting chip Sc cut by the intermediate cutting blade tip 8 are connected in the remaining region K (FIG. 2(b)) and cannot be broken off.

As a result, cutting chips of the work material W cut by the central, circumferential and intermediate cutting blade tips 36 to 38 of the drill head 31 become uncut block pieces called discs Sa to Sd as shown in FIG. 8 when the drill head 31 penetrates the work material W, that is, when the drill head 31 cuts and breaks through a distal end wall portion Wo of the work material W as shown by virtual lines in FIG. 5. Consequently, the cutting chips are left at the distal end surface side of the head main body without being discharged from the cutting chip discharge ports 34 and 35. It does not matter as much when the work material W comprises a single work material, since the cutting chips are discharged forward and fall from a hole of the penetrated work material W. On the other hand, drilling work becomes impossible when a plurality of work materials W1 to W5 are overlaid and subjected to deep-hole drilling work as shown in FIG. 9, since the discs Sa to Sd are blocked at an exit of a hole of a first work material W1 and the cutting chip discharge ports are clogged when attempting to drill a second work material W2 after the first work material W1 is drilled.

According to the drill head 1 of the present invention, the distal end surface side of the region OL where the intermediate cutting blade tip 8 circumferentially overlaps with the central cutting blade tip 6 is cut as described above, or the distal end surface side of the region M including a side slightly nearer than the overlapping region OL is cut as shown by the cut region K in FIG. 2 (b), whereby the disc breaker 12 composed of an inclined surface inclined downward toward the head center portion is formed at the head center side end portion of the flank 8b of the intermediate cutting blade tip 8 inclined upward toward the head center portion. Therefore, the border between the cutting chip which is cut by the central cutting blade tip 6 and the cutting chip which is cut by the intermediate cutting blade tip 8 is cut by the disc breaker 12, and so is the border between the cutting chip which is cut by the central cutting blade tip 8 and the cutting chip which is cut by the circumferential cutting blade tip 7. As a result, uncut block pieces to be formed between respective cutting blade tips 6 to 8 and the distal end wall portion of the work material W are fragmented and crushed when the drill head 1 penetrates the work material W. The fragmented and crushed cutting chips flow from the cutting chip discharge ports 4 and 5 into the interior cutting chip discharge passage 3 to be discharged outside.

Accordingly, even when a plurality of work materials W1 to W5 are overlaid and subjected to deep-hole drilling work as shown in FIG. 9, uncut block pieces to be formed between respective cutting blade tips 6 to 8 and the distal end wall portion of the work material W are fragmented and crushed at the time of penetrating the first work material W1. The fragmented and crushed cutting chips flow from the cutting chip discharge ports 4 and 5 into the interior cutting chip discharge passage 3 and are discharged outside. As a result, clogging of the cutting chip discharge ports 4 and 5 of the head main body 2 is eliminated, and normal cutting is carried out on and after the second work material. Thus, deep-hole drilling of a plurality of overlaid work materials can be performed properly.

The afore-described disc breaker 12 is preferably formed into such an inclined surface that an angle θ with respect to the plane Q orthogonal to the rotation axis G of the head main body 2 in the overlapping region OL or the region M including a side slightly nearer than that is in the range of 0 to 60 degrees. When the angle θ is below 0 degrees, that is, a negative angle, the border between the cutting chip which is cut by the central cutting blade tip 6 and the cutting chip which is cut by the intermediate cutting blade tip 8 is resistant to cutting, and there is a concern of not serving the role as the disc breaker 12. When the angle θ exceeds 60 degrees, a periphery edge side of the discbreaker 12 becomes too acute and may possibly be damaged.

## Claims

1. A drill head for deep-hole drilling comprising:
a head main body;
a cutting chip discharge port opened at a distal end surface of the head main body;
a central cutting blade tip mounted at a head center portion so as for a blade edge thereof to be inclined downward toward the head center portion;
a circumferential cutting blade tip mounted at a circumferential portion so as for a blade edge thereof to be inclined upward toward the head center portion;
an intermediate cutting blade tip mounted therebetween the central and circumferential cutting blade tips so as for a blade edge thereof to be inclined upward toward the head center portion, the cutting blade tips are facing the cutting chip discharge port;
an interior of a hollow portion of the head main body serving as a cutting chip discharge passage communicating with the cutting chip discharge port; and
a disc breaker formed at a head center side end portion of a flank of the intermediate cutting blade tip inclined upward toward the head center portion by cutting a distal end surface side of a region where the intermediate cutting blade tip circumferentially overlaps with the central cutting blade tip or a region including a side slightly nearer than that, the disc breaker composed of an inclined surface inclined downward toward the head center portion.

2. The drill head for deep-hole drilling according to claim 1, wherein the disc breaker is formed into such an inclined surface that an angle with respect to a plane orthogonal to a rotation axis of the head main body in the overlapping region or the region including the side slightly nearer than that is 0 to 60 degrees.
